Europäisches Patentamt

European Patent Office

Office européen des brevets

(11) Publication number: **0 303 622 B1**

## EUROPEAN PATENT SPECIFICATION

(45) Date of publication of patent specification: **16.06.93**   (51) Int. Cl.5: **C04B 35/48**, C04B 35/50, C04B 35/71

(21) Application number: **87903200.1**

(22) Date of filing: **29.04.87**

(86) International application number:
**PCT/US87/01040**

(87) International publication number:
**WO 87/06574 (05.11.87 87/24)**

(54) **TOUGHENING OF CERAMIC BODIES.**

(30) Priority: **29.04.86 US 857066**

(43) Date of publication of application:
**22.02.89 Bulletin 89/08**

(45) Publication of the grant of the patent:
**16.06.93 Bulletin 93/24**

(84) Designated Contracting States:
**AT BE CH DE FR GB IT LI LU NL SE**

(56) References cited:
| EP-A- 0 199 459 | JP-A- 1 201 661 |
| US-A- 3 916 585 | US-A- 4 316 964 |
| US-A- 4 358 516 | US-A- 4 507 394 |
| US-A- 4 525 464 | US-A- 4 626 517 |
| US-A- 4 640 902 | US-A- 4 659 680 |

(73) Proprietor: **CERAMATEC, INC.**
**2425 South 900 West**
**Salt Lake City, UT 84119(US)**

(72) Inventor: **VIRKAR, Anil, V.**
**1875 Suzette Circle**
**Salt Lake City, UT 84106(US)**
Inventor: **MATSUMOTO, Roger, L., K.**
**4221 South 845 East**
**Salt Lake City, UT 84107(US)**

(74) Representative: **Rees, David Christopher et al**
**Kilburn & Strode 30 John Street**
**London WC1N 2DD (GB)**

EP 0 303 622 B1

# Description

This invention relates generally to the toughening of ceramic bodies by inclusion therein of stress-absorbing particles or crystals.

Ceramics experience widespread use because of their high temperature properties. Ceramics are often high in strength but low in toughness. Numerous techniques have been utilized to expand the usefulness of ceramics by improving in various ways the toughness of ceramic bodies.

One manner of improving toughness which has been practiced extensively in recent years is that of inclusion in a ceramic body, such as an alumina body, of a significant amount of partially stabilized zirconia whereby the zirconia transforms upon exposure to stress from a tetragonal state to a monoclinic state. Zirconia, in the monoclinic state, occupies a larger volume per crystal than it does in the tetragonal state. Thus, the expansion of the zirconia crystal, upon exposure of a body containing transformable zirconia to stress, tends to interrupt stress fractures by placing that portion of the ceramic body containing transformed crystals in compression, thereby making the process of fracture more difficult. Toughening by this concept is generally referred to as transformation toughening.

Other techniques for toughening ceramic bodies involve the inclusion of whiskers, fibers, or flakes of various materials which are compatible with the ceramic body. Silicon carbide whiskers and fibers have been used recently to toughen ceramic bodies in a fashion similar to the toughening of a plastic body by inclusion of fiberglass and graphite fibers. The whiskers or fibers of silicon carbide are relatively difficult to form and special techniques are generally required to embed the whiskers or fibers properly within a particular ceramic body while it is being formed.

One shortcoming of phase transformation toughening of ceramics is that once a crystal converts from the tetragonal state to the monoclinic state, the toughening effect is thereafter substantially diminished in that vicinity since the crystal does not reconvert to the tetragonal state upon the relaxation of the induced stress. Low temperature degradation, which often occurs in partially stabilized zirconia bodies, is believed to be due to the phase transformation. Thus, phase transformation toughening may be viewed as a one-shot toughening technique.

Also, phase transformation toughening with tetragonal zirconia tends to work only at lower temperatures inasmuch as the tetragonal crystal becomes very stable above about 1000°C and does not convert to the monoclinic form. Further, the toughening effect decreases with increase in temperature towards 1000°C. Thus, significant toughening of ceramic bodies by inclusion of tetragonal zirconia can occur only up to temperatures of about 600-800°C. Most applications of ceramics for advanced uses, by contrast, require the ceramic to exhibit strength and toughness at much higher temperatures than for conventional uses.

Objects of the Invention

It is an object of the invention to provide a toughening mechanism for commercial ceramics whereby the mechanism offers an energy dissipative process for repeated application of stress.

It is a further object of the instant invention to provide a toughening mechanism whereby ceramic bodies are toughened over a broad range of temperatures, e.g., both below and above 1000°C.

A further object is to enhance the toughening effect by chemical modification of the ceramic.

In the drawings:-

Figure 1(a), (b) and (C) are schematics of hysteresis loops for ferromagnetic, ferroelectric and ferroelastic materials, respectively;

Figure 2(a), (b), (c) and (d) are x-ray diffraction graphs indicating intensities of certain (hkl) peaks before and after surface grinding; and

Figure 3 is an experimentally determined partial ferroelastic hysteresis loop for a CeTZP material.

According to the invention, there is provided a ceramic body containing a significant quantity of asymmetrical, stabilised crystals of a polycrystalline metal oxide having a zirconia or distorted zirconia crystalline structure, the crystals having domains within individual crystals which reorient themselves when subjected to stress whereby the reorientation causes an effective lengthening of the crystal in the direction of the stress without any substantial overall change in crystal volume, the reorientation absorbing at least a portion of the stress, and in which the modified metal oxide crystals have a crystal lattice c/a ratio greater than 1.019, the stabilised metal oxide crystals being zirconia or hafnia stabilised with ceria and in which the ceramic body contains minor quantities of SrO, BaO and mixtures thereof.

Preferably, the ceria is present in the zirconia or hafnia in quantities approaching the maximum solubility of ceria in the zirconia or hafnia.

The instant invention relates to ceramic bodies strengthened and/or toughened as a result of domain switching of asymmetrical crystals (crystals which lack a center of symmetry) which form at least a minor portion of the toughened ceramic bodies. A ceramic matrix surrounding these asymmetrical crystals may be of the same or different chemical composition and the same and/or different crystal structure as the domain-switching asymmetrical crystals. Further, the matrix may comprise entirely domain-switching.

A ceramic matrix containing asymmetrical domain-switching crystals in sufficient quantity to toughen substantially said ceramic matrix has been invented.

Polycrystalline ceramic matrices are strengthened and/or toughened by inclusion of ferroelastic asymmetrical crystals containing domains within the crystals whereby said domains switch under the influence of stress to cause said crystal to change shape without any attendant volume change.

The term switching denotes reorientation of internal crystallographic directions upon the application of a stress in excess of the threshold stress.

Certain ferroelastic crystals contain domains within a crystal. These domains may be considered intracrystalline structures having a certain volume, a certain shape, and certain other physical and electrical characteristics.

Polycrystalline ceramic bodies of various types of ceramic matrices, such as oxides, carbides, nitrides, or borides of aluminum, titanium, zirconium and silicon can be toughened and/or strengthened by inclusion of asymmetrical, phase-stable crystals such as stabilized tetragonal crystals of zirconia and hafnia, especially ceria-stabilized zirconia and hafnia crystals wherein the asymmetry of the crystals is exaggerated by the presence of ceria in comparison to other phase-stabilizing additives such as yttria, ytterbia, and the like. Other ingredients may be added to the asymmetrical crystals to enhance further the asymmetry of said crystals.

The toughening of a ceramic body contributed by the presence of asymmetrical stabilized crystals occurs through domain switching within said asymmetrical crystals wherein the crystal changes shape without any accompanying volume change. This is in contrast to transformation toughening of ceramics by inclusion of an unstabilized or partially stabilized crystal of, for example, zirconia or hafnia which changes volume upon phase transformation from the lower volume tetragonal state, for example, to the greater volume monoclinic state which represents the stable, residual state of the zirconia or hafnia.

The stabilized, domain-switching asymmetrical crystals useful in this invention are ferroelastic in nature, undergoing domain switching when subjected to stress. The domain-switching phenomenon occurring within such a crystal absorbs energy in a hysteresis fashion. Once the stress is removed, the domain switching leaves the crystal in the same structure, but different in shape. Application of a stress will cause the crystal to change shape again, thereby absorbing the newly experienced stress. Each domain-switching event occurs without any crystal phase transformation, that is, the crystal phase stays the same, e.g. in an asymmetrical state such as tetragonal, orthorhombic, etc., and without any accompanying volume change. The domain switching is, thus, a reversible, stress-absorbing phenomenon providing a permanent toughening effect, that is, the stabilized, domain-switching asymmetrical crystals repeatedly absorb energy.

Asymmetry of such stabilized crystals is important. A tetragonal crystal is defined by the length of its edges and by a vector passing through the geometric center of the crystal and connecting opposed corners of the crystal. Conceptually, a tetragonal crystal may be perceived as a solid structure having a square base and rectangular sidewalls wherein the height of the structure is greater or smaller than the dimension of the sides of the square base. In the following discussion, the height of the structure is assumed to be greater than its base. The taller the structure, the greater the height, generally identified as small "c." Domain switching may alter a structure with its longer leg in a vertical position to that same structure reoriented in a horizontal position with now the longer leg of the structure being in the horizontal direction. The structure does not rotate about any axis, but changes shape because the domains within the crystal shorten in a vertical direction and lengthen in a horizontal direction. All of this occurs without any volumetric change. Thus, the re-oriented, solid structure (asymmetrical crystal), now viewed as laying on its side, has the same volume as the structure (asymmetrical crystal) in a vertical position.

In these domain-containing asymmetrical ferroelastic crystals utilized in the present invention, the greater the proportional difference in length between a crystal's major axis, i.e. between the vector c, and the minor axes, the greater the amount of energy absorbed upon domain switching.

Both zirconia and hafnia tetragonal crystals fully stabilized in the tetragonal phase are useful in this invention. Stabilizers such as yttria, ytterbia, calcia, magnesia, ceria, and the like may be used, although ceria is preferred since it enhances the difference in length between the major and minor axes. In addition to the aforementioned stabilizing agents, various other compounds may be added to stabilize crystals to enhance the dimensional difference between the major axes and the minor axes of the crystal.

For example, the ratio c/a in yttria-stabilized polycrystalline tetragonal zirconia (YTZP) (containing 3 mol.% yttria) is about 1.015, while c/a in ceria-stabilized polycrystalline tetragonal zirconia (CeTZP) (containing 12 mol.% ceria) is about 1.018. Fracture toughness measurements also indicate that YTZP had a toughness of $5MPa\sqrt{m}$ while CeTZP had a toughness of $9MPa\sqrt{m}$. This indicated that an increase in c/a increases toughness provided the coercive or threshold stress is unaffected. The rationale is that since the switching strain is proportional to (c-a)/a, the larger the c/a, the larger is the switching strain. This explains why CeTZP is tougher than YTZP. Additions of other compounds which can dissolve in zirconia and hafnia and will increase c/a will increase toughness provided the threshold, i.e. the coercive stress, is not adversely affected.

It is known that materials such as $LnXO_4$, where Ln stands for lanthanides and X stands for Nb or Ta, are either tetragonal or monoclinic. The tetragonal form is similar to zirconia ($ZrO_2$) in that $Zr^{+4}$ is replaced by a trivalent ion ($Ln^{+3}$) and a pentavalent ion ($X^{+5}$). The c/a ratio in $YNbO_4$, for example, is 2.10. Since there are two cations, it is appropriate to use c/2a for comparison purposes. The c/2a ratio is 1.05, which is much greater than that for CeTZP (1.018).

Additions of $LnXO_4$ where Ln is Y, Yb, Gd, La, Er, Sm, Ho, Dy, Pr, Nd, Pm, Eu, Tb, Tm, Lu and X is Niobium, Nb or Tantalum, will increase c/a and also the toughness. $LnXO_4$ can be added singly or collectively in amounts up to 50% by weight or even more to $ZrO_2$ and $HfO_2$ and alloys of $ZrO_2$ and $HfO_2$ containing phase stabilizers such as $Y_2O_3$, $CeO_2$, CaO, MgO, and the like, including combinations thereof. There also are other compounds which may serve the same purpose as the $LnXO_4$ compounds. These are monoclinic compounds which again originate from the distorted $ZrO_2$-type structure, such as $MnWO_4$, $ZnWO_4$, $MnMoO_4$ and $ZnMoO_4$ and similar compounds.

Toughening in zirconia-based polycrystalline ceramics arises by virtue of the instant invention is due to phenomenon which is quite distinct from transformation toughening via crystal phase change. There are many ceramic materials which transform into what are called ferroelastics as the temperature is decreased. Ferroelastic materials are characterized by the existence of at least two equivalent strain states of permanent strain and can be switched from one state to the other by applying stress. The transition from a paraelastic state to a ferroelastic one is very similar to that from a paraelectric to a ferroelectric or from a paramagnetic to a ferromagnetic transition. Crystal asymmetry and space group determine whether or not a material will have a ferroelastic state. Specifically, for a material to be ferroelastic, it cannot have a crystalline center of symmetry.

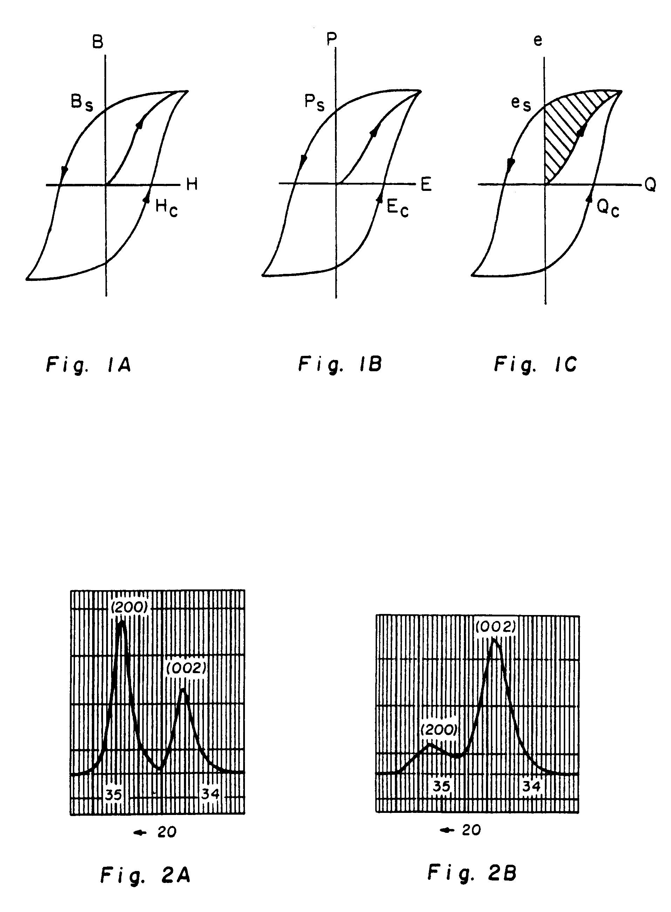

Before elaborating on the zirconia system, a brief description of the potential toughening effect is given by drawing an analogy with ferroelectrics and ferromagnetics. In the case of ferromagnetics, it is well-known that a hysteresis exists between magnetization B and applied field H. With reference to FIG. 1a, $B_s$ is the remnant or spontaneous magnetization while $H_c$ is the coercive field which must be applied to reverse the orientation of $B_s$. Specifically, upon application of a magnetic field of strength greater than $H_c$, the domains orient in the direction of the applied field. In ferroelectrics, a hysteresis exists between polarization P and applied electric field E with $P_s$ representing spontaneous polarization and $E_c$ indicating the coercive electric field. (See FIG. 1b.) Application of an electric field of strength in excess of $E_c$ orients electric dipoles in unison with the field. When the sense of the field is reversed, so is the sense of the polarization. This phenomenon is referred to as switching.

In ferroelastics, there exists a hysteresis between strain e and stress $\sigma$, with $e_s$ and $\sigma c$ having corresponding meanings as in the case of ferromagnetics and ferroelectrics. (See FIG. 1c.) In ferromagnetics, ferroelectrics or ferrelastics, the area enclosed in the loop is the energy absorbed in a single cycle. In ferroelastics, the application of a stress in excess of $\sigma c$ (threshold or coercive stress) causes switching, i.e. the ferroelastic domains reorient.

It has been pointed out by Michel, et al., Journal of Material Science, Vol. 18, pages 2618-2628 (1983) that high temperature cubic to tetragonal transition is of the paraelastic to ferroelastic type and also that single crystals of tetragonal zirconia consist of tiny domains (on the order of 58 nm in size). The classification or species according to Aizu, Physics Review, B2,754 (1970) is m3m F 4/mmm wherein m3m denotes the point group of the high temperature cubic form while 4/mmm is the point group of the lower symmetry tetragonal polymorph. Although Michel, et al., supra, presented microscopic evidence of the presence of domains, no conclusion was presented that ferroelastic switching was an operative energy absorption mechanism. Rather, variation in surface energy from one set of (hkl) planes to another due to differing bond strength and crack deflection were identified by Michel, et al. as the pertinent toughening mechanism in the single crystals studied.

The instant invention involves the discovery that ferroelastic hysteresis does indeed occur in tetragonal zirconia polycrystalline (TZP) ceramics doped with yttria and/or ceria. While a specific example of hysteresis will be described later, this ferroelastic hysteresis is found to be the predominant toughening mechanism in bodies containing asymmetrical, domain-switching crystals. In this mechanism, tetragonal zirconia particles remain tetragonal at all times. However, upon the application of a stress of sufficient magnitude and appropriate sense, the randomly oriented domains of the asymmetrical crystals, preferentially orient. The overall shift in domain orientation is caused by minute atomic shifts. The energy absorbed in the process, as reflected in the partial hysteresis, leads to increased toughness. The toughening effect resulting from this mechanism will not disappear at 1000°C unlike that due to transformation toughening, but will only disappear above about 1600°C, i.e., in the cubic paraelastic state. X-ray diffraction results in support of the hypothesis are provided hereinafter.

Certain work of Ingel, et al., Journal of American Ceramic Society, C-150 (1982) on single crystals of tetragonal Zirconia has demonstrated that high strengths are maintained to temperatures as high as 1500°C. By contrast, the toughening effect due to transformation toughening (tetragonal to monoclinic) decreases with increasing temperature and completely disappears at approximately 1000°C, the temperature above which the monoclinic polymorph of zirconia is unstable. Clearly, tetragonal single crystals used by Ingel, et al. apparently were strong and tough on account of the mechanism described herein.

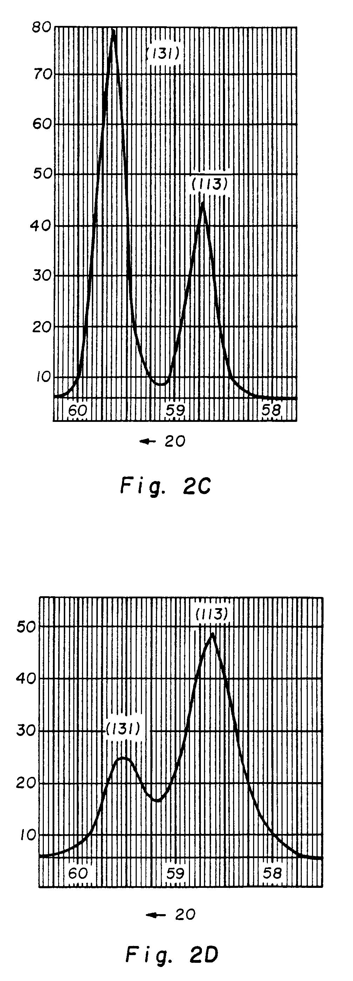

To obtain experimental verification of the model, CeTZP samples were examined using x-ray diffraction (XRD). Specifically, XRD patterns were obtained on pristine (as fired) and ground surfaces. It was noted that (200), (220) and (131) peaks became weaker upon grinding while (002), (202) and (113) peaks became stronger. This implies that there was domain reorientation or switching due to stresses introduced during grinding. The change in intensities, shown in FIG. 2, is a clear indication that: (a) tetragonal zirconia is ferroelastic, and (b) stress generated during grinding is in excess of the coercive stress.

Similar studies were also conducted on YTZP. Intensities of (002), (202) and (113) peaks were observed to increase upon grinding while those of (200), (220) and (131) were observed to decrease. The relative change in the intensities in the YTZP was smaller than in CeTZP consistent with the observation that YTZP exhibits lower toughness ($5MPa\sqrt{m}$) in comparison to CeTZP ($9MPa\sqrt{m}$).

Table I gives the pertinent information about composition and mechanical properties of the CeTZP and YTZP materials.

A preliminary calculation of the contribution to toughness has been made. We have shown that:

$$K_C = K_C^O \left[ 1 + \frac{2he^2E^2}{(1-v)K_C^{o2}} \right]^{1/2}$$

where

$K_c^o$ = toughness in the absence of ferroelasticity
$E$ = modulus
$v$ = Poisson's ratio
$e$ = strain due to switching
$h$ = zone depth of switched domains

For CeTZP, with an assumed value of h ~20$\mu$m, $\Delta K_c$ (i.e. improvement over $K_c^o$) of ~$5MPa\sqrt{m}$ is calculated. Experimentally measured, $K_c$ is found to be about $9MPa\sqrt{m}$ (since $K_c^o$ is about $3.5MPa\sqrt{m}$, this result is in good agreement with calculations).

The implications of the results are far reaching:

1. Enhancement of the area in the hysteresis loop is significant since that area represents the energy which is absorbed in the fracture process. Since the coercive field in ferroelectrics is dependent upon numerous factors such as (i) grain size, (ii) impurities, (iii) processing history, and (iv) internal bias, it would appear that in ferroelastics the coercive stress will exhibit similar dependencies. Thus, chemical formulation can substantially influence mechanical properties. To date, much of the effort in toughening of ceramics is based on micromechanical concepts such as microcracking, crack deflection, etc. The mechanism described herein, by contrast, depends upon the very physical and chemical aspects of the material as well as crystallographic considerations.

Toughening by ferroelastic domain switching has been proposed by Pohanka, et al., Journal of American Ceramic Society, Vol. 61 [1-2], 72 (1978) in BaTiO$_3$, which, however, is not completely ferroelastic. No extension of such concepts has been made, however, to true ferroelastic materials in general or to the important class of zirconia and hafnia polycrystalline ceramics. Neither have there been efforts to study other materials in this context.

2. With reference to zirconia-based ceramics, the present model suggests that toughness and strength characteristics are not expected to be the same for all dopants. This indeed appears to be the case. Specifically, YTZP has different $K_c$ and $\sigma_F$ in comparison with CeTZP. Careful measurement of lattice parameters and change of strain upon cubic to tetragonal transition and the coercive stress can enable specific engineering of such materials.

3. Hafnia-based materials are of great significance. Prior interest in polycrystalline hafnia ceramics was lacking because the volume change from tetragonal to monoclinic for a hafnia crystal is smaller than that in zirconia, thereby leading to a smaller toughening contribution in a ceramic matrix via transformation toughening. But, for the mechanism described herein, it is not the tetragonal to monoclinic transformation which is of interest, it is the cubic to tetragonal transition temperature. Since the cubic to tetragonal temperature for hafnia is higher than in zirconia, hafnia-based materials will have higher use temperatures. THP (tetragonal hafnia polycrystalline) ceramic may exhibit even better high temperature properties than TZP.

4. Alloying of hafnia and zirconia with each other as well as with other isostructural materials is another technique of enhancing the toughening property contributed by the technique of this invention.

5. Finally, as the mechanism proposed here does not require the matrix to place a constraint on the particles for retaining tetragonal $ZrO_2$ metastably, modulus of the matrix is not a critical issue as in the case of transformation toughening. In fact, very high modulus materials may tend to prevent domain switching. Thus, by incorporating a dispersion of TZP particles in a low modulus matrix, such as a glass or a glass ceramic, an increase in toughness and strength can be realized.

Specific examples in the zirconia-based materials are given below.

## EXAMPLE 1

A zirconia-based ceramic body was fabricated by dry pressing powder followed by sintering at a temperature above 1500°C for at least one hour. The ceramic body contained 12 mol.% ceria ($CeO_2$) and 88 mol.% zirconia ($ZrO_2$). Alumina ($Al_2O_3$) in the amount of 10 wt.% was added to the powder mixture. X-ray diffraction with $CuK\alpha$ radiation showed that the sample contained only the tetragonal polymorph of zirconia, and no monoclinic form was observed. The sample was subjected to a grinding process. The ground sample was again examined by x-ray diffraction. There was no change in crystal structure, i.e. there was no monoclinic formed. However, the tetragonal subcrystals (domains) underwent a change in orientation. This was evidenced by a change in intensities of the (002) & (200) and (113) & (131) peaks. Specifically, the intensity of the (002), (113) peaks increased and that of the (200), (131) peaks decreased. FIG. 2 shows the intensities of the (002) and (200) peaks before and after grinding.

## EXAMPLE 2

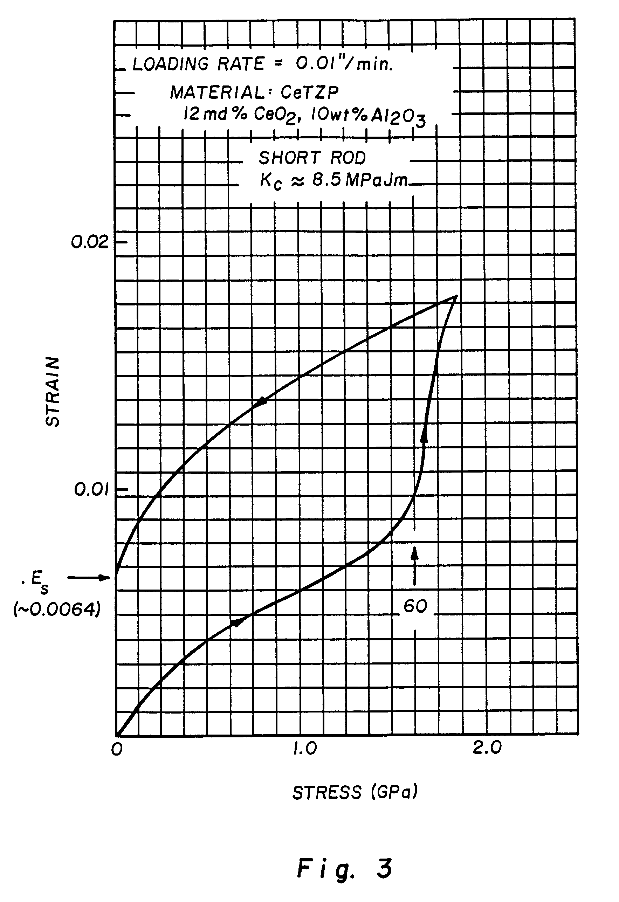

A strain gauge was attached to a sample made in a similar manner as in Example 1. The sample with the strain gauge was subjected to compressive stresses up to 2.4GPa and the strain was recorded continuously. The sample was finally unloaded. It was observed that the sample had a remnant strain of ~6000$\mu$ inch/inch. The stress-strain curve was nonlinear and the partial hysteresis, experimentally determined, is shown in FIG. 3. X-ray diffraction revealed that the domain reorientation had occurred (intensities of various (hkl) peaks had changed). The existence of hysteresis and the change in domain orientations are requisite characteristics of ferroelastics.

## EXAMPLE 3

Yttria-doped tetragonal zirconia polycrystalline (YTZP) ceramics containing 3 mol.% yttria and 97 mol.% zirconia and 10 wt.% alumina were fabricated by sintering isostatically pressed powder compacts. Ceria-doped tetragonal polycrystalline zirconia (CeTZP) specimens were fabricated by the process described in Example 1. X-ray diffraction patterns using $CuK\alpha$ radiation were obtained in order to determine the c/a ratios where c and a are the unit cell dimensions of the tetragonal structure. The c/a ratios for YTZP and CeTZP were 1:015 and 1:018, respectively. The switching strain is proportional to (c/a - 1) and if the coercive stress is the same, the energy absorbed in the hysteresis will be greater if c/a is greater, and consequently the toughness will be greater. Fracture toughness was measured using the short rod method. YTZP had a toughness of ~5MPa$\sqrt{m}$ while CeTZP had a toughness of ~8MPa$\sqrt{m}$. These results indicate that increasing c/a increases toughness provided the coercive stress is unaffected.

## EXAMPLE 4

$YNbO_4$ in powder form was prepared by calcining a mixture of $Y_2O_3$ and $Nb_2O_5$. A powder of CeTZP described in Example 1 was doped with 5 weight % of $YNbO_4$ and a dense sample was fabricated by sintering a powder compact at 1550°C for two hours. X-ray diffraction revealed that $YNbO_4$ completely dissolved in CeTZP and the c/a ratio was 1.0205. This experiment indicated that c/a can be modified by adding $YNbO_4$, which is from the family of compounds $LnXO_4$ with Ln = Y, Yb, Gd, La, Er, Sm, Ho, Dy, Pr, Nd, Pm, Eu, Tb, Tm, Lu and X = Nb or Ta. Change in c/a changes the switching strain and should therefore affect toughness.

Inclusion of minor quantities of strontia and baria in the above compositions provides some processing and compositional advantages, including the likelihood of decreasing coercive stress.

Coercive stress is the level of stress required to induce domain switching. If that level of stress is too high, fracture of an article may occur before domain switching occurs. Thus, it is generally desirable to maintain or decrease the coercive stress of a material while increasing or maintaining a high c/a ratio. In many materials having a high c/a ratio, e.g. 1.015 and higher, a compositional change which lowers the coercive stress effectively toughens the material. Compositional changes which increase the c/a ratio, especially to a value of 1.019 and above, while maintaining or lowering the coercive stress are most desirable and effective in toughening the material.

The techniques of the instant invention are applicable to many types of ceramic matrices. For example, alumina, magnesia, glass ceramic, spinel, mullite, silicon carbide, silicon nitride and various other types of polycrystalline ceramics may be strengthened by inclusion therein of at least minor quantities of asymmetrical ferroelastic crystals which undergo domain switching under stress and particularly such asymmetrical crystals having a crystal lattice c/a ratio greater than about 1.019.

Alumina ceramics have been phase transformation toughened by additions of partially stabilized tetragonal crystals of zirconia which transform to the larger monoclinic state under certain conditions. A similar effect may be obtained by ferroelastic domain switching.

## Claims

1. A ceramic body containing a significant quantity of asymmetrical, stabilised crystals of a polycrystalline metal oxide having a zirconia or distorted zirconia crystalline structure, the crystals having domains within individual crystals which reorient themselves when subjected to stress whereby the reorientation causes an effective lengthening of the crystal in the direction of the stress without any substantial overall change in crystal volume, the reorientation absorbing at least a portion of the stress, and in which the modified metal oxide crystals have a crystal lattice c/a ratio greater than 1.019, the stabilised metal oxide crystals being zirconia or hafnia stabilised with ceria and in which the ceramic body contains minor quantities of SrO, BaO and mixtures thereof.

2. A ceramic body as claimed in Claim 1 characterised in that the ceria is present in the zirconia or hafnia in quantities approaching the maximum solubility of ceria in the zirconia or hafnia.

## Patentansprüche

1. Keramischer Körper, enthaltend eine signifikante Menge an asymmetrischen, stabilisierten Kristallen eines polykristallinen Metalloxids einer Zirconiumdioxidkristallstruktur oder einer verzerrten Zirkoniumdioxidkristallstruktur, wobei die Kristalle Bereiche innerhalb individueller Kristalle aufweisen, welche sich bei Einwirkung einer Belastung umorientieren, wobei die Umorientierung eine effektive Streckung des Kristalls in der Belastungsrichtung ohne wesentliche Gesamtänderung des Kristallvolumens bewirkt und die Umorientierung wenigstens einen Teil der Einwirkungsenergie absorbiert, und in welchem die modifizierten Metalloxidkristalle ein Kristallgitter mit einem c/a-Verhältnis größer als 1,019 aufweisen, die stabilisierten Metalloxidkristalle mit Cerdioxid stabilisiertes Zirkoniumdioxid oder Hafniumdioxid sind, und in welchem geringe Mengen an SrO, BaO und Mischungen davon enthalten sind.

2. Keramischer Körper nach Anspruch 1, dadurch gekennzeichnet, daß das Cerdioxid im Zirkoniumdioxid oder Hafniumdioxid in der maximalen Löslichkeit von Cerdioxid in Zirconiumdioxid oder Hafniumdioxid nahekommenenden Mengen vorliegt.

## Revendications

1. Corps céramique contenant une quantité importante de cristaux asymétriques stabilisés d'un oxyde métallique polycristallin ayant la structure cristalline de l'oxyde de zirconium $Z_rO_2$ ou d'un oxyde déformé, les cristaux ayant des domaines à l'intérieur de cristaux individuels qui se réorientent eux-mêmes lorsqu'ils sont soumis à une contrainte, par laquelle la réorientation provoque un allongement efficace du cristal dans la direction de la contrainte sans changement essentiel global dans le volume du cristal, la réorientation absorbant au moins une partie de la contrainte, et dans laquelle les cristaux d'oxyde métallique modifié possèdent un réseau cristallin avec un rapport c/a plus grand que 1,019, les cristaux stabilisés d'oxyde métallique étant de l'oxyde de zirconium ou de l'oxyde d'hafnium stabilisé par de l'oxyde de cérium et dans lesquels le corps céramique contient de faibles quantités de SrO, BaO et de mélanges de ceux-ci.

2. Corps céramique selon la revendication, 1 caractérisé en ce que l'oxyde de cérium est présent dans l'oxyde de zirconium ou dans l'oxyde d'hafnium en quantités approchant la solubilité maximale de l'oxyde de cérium dans l'oxyde de zirconium ou l'oxyde d'hafnium.

Fig. IA

Fig. IB

Fig. IC

Fig. 2A

Fig. 2B

Fig. 2C

Fig. 2D

Fig. 3